# EUROPÄISCHE PATENTSCHRIFT

(11) **EP 4 198 494 B1**
(45) Veröffentlichungstag und Bekanntmachung des Hinweises auf die Patenterteilung: **11.02.2026**
(21) Anmeldenummer: 21216057.6
(22) Anmeldetag: 20.12.2021
(51) Int. Cl.: G01N 21/03, G01N 21/39, G01N 21/85, G01N 21/3504, G01N 21/15

(54) **MESSGERÄT ZUR ABSORPTIONS-SPEKTROSKOPISCHEN GASMESSUNG MIT EINEM REFLEXIONSELEMENT AUS POLYKRISTALLINEM ALUMINIUMOXID UND VERFAHREN ZUR ABSORPTIONS-SPEKTROSKOPISCHEN GASMESSUNG DAMIT**
MEASURING DEVICE FOR ABSORPTION SPECTROSCOPY OF A GAS HAVING A REFLECTION ELEMENT MADE OF POLYCRYSTALLINE ALUMINIUM OXIDE AND METHOD FOR ABSORPTION SPECTROSCOPY USING THE SAME
DISPOSITIF DE MESURE DESTINÉ À LA MESURE DE GAZ PAR SPECTROSCOPIE D'ABSORPTION COMPRENANT UN ÉLÉMENT RÉFLÉCHISSANT D'OXYDE D'ALUMINIUM POLYCRISTALLIN ET PROCÉDÉ DE MESURE DES GAZ PAR SPECTROSCOPIE D'ABSORPTION UTILISANT LE MÊME

(43) Veröffentlichungstag der Anmeldung: 21.06.2023
(73) Patentinhaber: M & C TechGroup Germany GmbH, 40885 Ratingen (DE)
(72) Erfinder: Georges des Aulnois, Johann, 78000 Versailles (FR); Lohr, Michael, 78234 Engen (DE); Rumm, Hans-Jörg, 40145 Oberhausen (DE)
(74) Vertreter: Berkenbrink, Kai-Oliver

(56) Entgegenhaltungen:
- EP-A1- 2 065 738
- WO-A1-2020/142138
- WO-A1-2021/156731
- DE-U1- 202008 013 557
- GB-A- 1 426 230
- US-A- 6 118 520

## Beschreibung

Die Erfindung betrifft ein Messgerät zur absorptions-spektroskopischen Gasmessung, sowie ein Verfahren zur absorptions-spektroskopischen Gasmessung.

Eine absorptions-spektroskopische Gasmessung wird üblicherweise durch die Laser-Absorptions-Spektroskopie und insbesondere durch die Diodenlaser-Absorptions-Spektroskopie mittels durchstimmbarem Laser, die auch als TDLAS (Tuneable Diode Laser Absorption Spectroscopy) bezeichnet wird, durchgeführt. Diese Spektroskopie eignet sich besonders gut für die Gasmessung, insbesondere zur Bestimmung von chemischen und/oder physikalischen Parametern eines Gases. Besonders vorteilhaft eignet sich die Laser-Absorptions-Spektroskopie zur Bestimmung der Konzentration eines Gases in einem Gasgemisch. Daneben können neben der Konzentration beispielsweise auch die Temperatur, der Druck, die Geschwindigkeit und der Massenstrom eines Gases bestimmt werden.

Ein Messgerät zur absorptions-spektroskopischen Gasmessung mittels Diodenlaser-Absorptions-Spektroskopie mittels durchstimmbaren Laser (TDLAS) umfasst insbesondere eine Strahlungsvorrichtung, durch die ein Laserstrahl erzeugbar ist, ein Reflexionselement, durch das der Laserstrahl reflektierbar ist, sowie wenigstens ein Detektionselement, durch das ein Laserstrahl detektierbar ist. Die Strahlungsvorrichtung kann insbesondere eine Laserdiode sein, durch welche ein durchstimmbarer Laserstrahl erzeugbar ist. Der durch die Strahlungsvorrichtung erzeugte Laserstrahl ist entlang einer ersten optischen Achse zum Reflexionselement leitbar und der durch das Reflexionselement reflektierte Laserstrahl anschließend entlang einer zweiten optischen Achse vom Reflexionselement zum Detektionselement leitbar.

Zur absorptions-spektroskopischen Gasmessung mittels eines solchen TDLAS wird ein zu messendes Gasgemisch mit dem Laserstrahl durchstrahlt, während dieser entlang der ersten optischen Achse und der zweiten optischen Achse läuft. Während dieser Durchstrahlung des Gases wird die Emissionswellenlänge des abstimmbaren Diodenlasers auf die charakteristischen Absorptionsbanden des zu messenden Gases im Gasgemisch abgestimmt, was auf Grund der Absorption zu einer Verringerung der Strahlungsintensität des Laserstrahles führt. Diese Verringerung der Strahlungsintensität führt zu einer Verringerung der durch das Detektionselement gemessenen Signalintensität, die anschließend zur Gasmessung, insbesondere zur Bestimmung der Gaskonzentration des Gases im Gasgemisch, verwendet werden kann. Die Gaskonzentration kann bekanntermaßen beispielsweise mittels des Beer-Lambert-Gesetzes bestimmt werden.

Der zu verwendende Diodenlaser kann je nach zu messendem Gas und gewünschtem Abstimmungsbereich gewählt werden. Beispielsweise können durch DFB-Laser (Distributed Feedback Laser) Wellenlängenbereiche zwischen 700 nm und 3 µm, durch VCSEL-Laser (Vertical Cavity Surface Emitting Laser) Wellenlängenbereiche bis etwa 2,1 µm, durch ICL-Laser (Interband Cascade Laser) Wellenlängenbereiche zwischen 2,8 µm und 5,8 µm und durch QCL-Laser (Quantum Cascade Laser) Wellenlängenbereiche oberhalb von 3,5 µm abgedeckt werden.

TDLAS können zur Gasmessung von Gasen verwendet werden, welche wenigstens eine charakteristische Absorptionsbande oder Absorptionslinie in diesen Wellenlängenbereichen aufweisen, also beispielsweise Sauerstoff (O₂), Kohlenstoffdioxid (CO₂), Kohlenmonoxid (CO), Stickoxide (NOx), Ammoniak (NH₃), Schwefelwasserstoff (H₂S), Schwefeloxide (SOx), Halogenwasserstoffverbindungen (HCl, HF), Formaldehyd (CH₂O), Wasserdampf (H₂O) oder Mischungen daraus.

Eine besondere Herausforderung bei der Verwendung von TDLAS stellt die Verwendung eines geeigneten Reflexionselementes dar, da dieses zahlreiche, sehr spezielle Eigenschaften aufweisen muss. So muss das Reflexionselement insbesondere im Wellenlängenbereich des Laserstrahls, der durch die Strahlungsvorrichtung erzeugt und zum Reflexionselement geleitet wird, transparent und reflektierbar sein. Ferner muss das Reflexionselement gegenüber aggressiven Gasen, mit denen es während der Gasmessung in Kontakt treten kann, beständig sein und dabei auch hohen Temperaturen widerstehen können. Ferner sollte das Reflexionselement im Falle einer Verunreinigung einfach zu reinigen sein.

Im Stand der Technik werden regelmäßig Reflexionselemente aus Saphir verwendet. Diese weisen jedoch zahlreiche Nachteile auf. So ist Saphir doppelbrechend, so dass der reflektierte Laserstrahl in mehrere Strahlen aufgebrochen wird. Nachteilig ist ferner die technisch aufwändige Bearbeitung von Saphir. Schließlich ist Saphir auf Grund seines hohen Preises auch unter ökonomischen Gesichtspunkten nachteilig.

Daneben werden im Stand der Technik auch regelmäßig Reflexionselemente aus YAG (Yttrium-Aluminium-Granat) verwendet. Diese sind aber aufgrund der hohen Rohmaterialkosten nachteilig.

Auf Grund dieser Nachteile wird teilweise auch Quarz als Reflexionselement verwendet. Allerdings kann Quarz nur für Wellenlängenbereiche unter etwa 3 µm eingesetzt werden.

Die EP 2 065 738 A1 beschreibt ein TDLAS-System mit einer Gaszelle mit einem Würfeleck-Retroreflektor, der aus Saphir besteht.

Die WO 2020/142138 A1 beschreibt eine Sonde zur Gasdetektion mit einem Würfeleck-Retroreflektor, der optional aus einem Aluminiumoxid-Material, z.B. aus Saphir, besteht und erwähnt eine Anti-Reflexions-Beschichtung für optische Elemente.

Die WO 2021/156731 A1 beschreibt Silizium, Saphir, Spinell, Aluminiumoxynitrid oder Siliziumdioxid als mögliche Materialien für einen Retroreflektor für optische Messungen in Hochtemperaturumgebungen.

Weitere optische Apparaturen zur Gasmessung werden beispielsweise in US 6,118,520 A und DE 20 2008 013557 U1 offenbart.

Der Erfindung liegt die Aufgabe zu Grunde, ein Messgerät zur absorptions-spektroskopischen Gasmessung, insbesondere in Form eines TDLAS, mit einem alternativen Reflexionselement zur Verfügung zu stellen. Insbesondere soll das Reflexionselement auch für Wellenlängen über 3 µm und insbesondere auch im mittleren infraroten Wellenlängenbereich verwendbar sein. Nach einer weiteren Aufgabe soll das Reflexionselement nicht doppelbrechend sein. Nach einer weiteren Aufgabe soll das Reflexionselement chemisch und thermisch beständig sein, insbesondere beständig sein gegenüber aggressiven Gasen und bei hohen Temperaturen. Nach einer weiteren Aufgabe soll das Reflexionselement einfach zu reinigen sein. Schließlich soll das Reflexionselement nach einer weiteren Aufgabe ökonomisch vorteilhaft zur Verfügung stellbar sein, also insbesondere einfach zu bearbeiten sein und zu möglichst geringen Kosten zur Verfügung stellbar sein.

Zur Lösung dieser Aufgaben wird zur Verfügung gestellt ein Messgerät zur absorptions-spektroskopischen Gasmessung gemäß Anspruch 1, der die vorliegende Erfindung definiert.

Die Erfindung beruht auf der überraschenden Erkenntnis, dass Spinell, Polykristallines Aluminiumoxid oder Aluminiumoxynitrid als Reflexionselement für ein Messgerät zur absorptions-spektroskopischen Gasmessung, insbesondere in Form eines TDLAS, verwendbar ist.

Spinell, genauer Magnesiaspinell, ist ein Mineral der Spinellgruppe mit der chemischen Zusammensetzung MgAl₂O₄, welches im kubischen Kristallsystem kristallisiert. Überraschend hat sich herausgestellt, dass Spinell besonders vorteilhaft als Reflexionselement in einem Messgerät zur absorptions-spektroskopischen Gasmessung, insbesondere in einem TDLAS, verwendbar ist. Insoweit ist Spinell für einen Laserstrahl in einem breiten Wellenlängenbereich transparent und ein Laserstrahl durch den Spinell reflektierbar. Insoweit ist Spinell in einem Wellenlängenbereich von etwa 0,3 bis 5,6 µm transparent und damit insbesondere auch im mittleren infraroten Wellenlängenbereich und zwar insbesondere auch oberhalb von 3 µm.

Polykristallines Aluminiumoxid, das auch als "PCA" (Polycrystalline Alumina) bezeichnet wird, ist eine hochdichte Keramik aus Aluminiumoxid. Üblicherweise wird Polykristallines Aluminiumoxid hergestellt durch Pressen und anschließendes Sintern von pulverförmigem Aluminiumoxid. Bevorzugt ist das in der vorliegenden Erfindung zur Anwendung kommende Polykristalline Aluminiumoxid hergestellt aus hochfeinem Aluminiumoxidpulver, besonders bevorzugt mit einer Korngröße unter 1 µm. Besonders bevorzugt liegt das Polykristalline Aluminiumoxid als transparentes Polykristallines Aluminiumoxid vor, also als sogenanntes TPCA (Transparent Polycrystalline Alumina). Überraschend hat sich erfindungsgemäß herausgestellt, dass Polykristallines Aluminiumoxid vorteilhaft als Reflexionselement in einem Messgerät zur absorptions-spektroskopischen Gasmessung, insbesondere in einem TDLAS, verwendbar ist. Insoweit ist Polykristallines Aluminiumoxid für einen Laserstrahl in einem breiten Wellenlängenbereich transparent und ein Laserstrahl durch das Polykristalline Aluminiumoxid reflektierbar. Insoweit ist Polykristallines Aluminiumoxid in einem Wellenlängenbereich von etwa 0,3 µm bis etwa 5,6 µm transparent und damit insbesondere auch im mittleren infraroten Wellenlängenbereich und zwar insbesondere auch oberhalb von 3 µm.

Aluminiumoxynitrid ist ein keramischer Werkstoff aus den Elementen Aluminium, Sauerstoff und Stickstoff, der auch als "ALON" bezeichnet wird. Überraschend hat sich herausgestellt, dass Aluminiumoxynitrid vorteilhaft als Reflexionselement in einem Messgerät zur absorptions-spektroskopischen Gasmessung, insbesondere in einem TDLAS, verwendbar ist. Insoweit ist Aluminiumoxynitrid für einen Laserstrahl in einem breiten Wellenlängenbereich transparent und ein Laserstrahl durch das Aluminiumoxynitrid reflektierbar. Insoweit ist Aluminiumoxynitrid in einem Wellenlängenbereich von etwa 0,3 µm bis etwa 5,2 µm transparent und damit insbesondere auch im mittleren infraroten Wellenlängenbereich und zwar insbesondere auch oberhalb von 3 µm.

Insbesondere sind Spinell, Polykristallines Aluminiumoxid und Aluminiumoxynitrid jedoch jeweils nicht doppelbrechend, so dass der Laserstrahl besonders vorteilhaft durch Spinell, Polykristallines Aluminiumoxid und Aluminiumoxynitrid reflektierbar ist, da der Laserstrahl bei einer Reflexion durch jede dieser Substanzen nicht in mehrere Strahlen aufgebrochen wird. Ferner erweisen sich Spinell, Polykristallines Aluminiumoxid und Aluminiumoxynitrid gegenüber aggressiven Gasen und hohen Temperaturen als besonders beständig. Schließlich sind Spinell, Polykristallines Aluminiumoxid und Aluminiumoxynitrid einfach zu reinigen und können ökonomisch vorteilhaft zur Verfügung gestellt werden, da sie gut zu bearbeiten sind, insbesondere einfacher als Saphir, und mit geringen Kosten, insbesondere geringere Kosten als Saphir zur Verfügung gestellt werden können. Vorteilhaft an der Verwendung dieser Substanzen als Reflexionselement in einem Messgerät zur absorptions-spektroskopischen Gasmessung, insbesondere in einem TDLAS, ist jedoch insbesondere auch, dass sich diese Substanzen sehr gut beschichten lassen, insbesondere auch mit einer Antireflexions-Beschichtung (AR-Beschichtung), wie nachfolgend näher ausgeführt. Wenngleich sich Spinell, Polykristallines Aluminiumoxid, Aluminiumoxynitrid, wie vorstehend ausgeführt, gleichermaßen vorteilhaft als Reflexionselement in einem Messgerät zur absorptions-spektroskopischen Gasmessung, insbesondere in einem TDLAS, eignen, wird Spinell besonders bevorzugt als ein solches Reflexionselement verwendet, da dieses die besten Eigenschaften hinsichtlich Transmission, Reflexion, Beständigkeit, Reinigbarkeit, Beschichtbarkeit und Kosten zeigte.

Erfindungsgemäß weist das Reflexionselement eine Beschichtung auf. Besonders bevorzugt weist das Reflexionselement eine Antireflexions-Beschichtung (AR-Beschichtung) auf. Alternativ oder kumulativ kann das Reflexionselement eine Kratzschutz-Beschichtung oder eine Temperaturschutz-Beschichtung aufweisen.

Erfindungsgemäß weist das Reflexionselement eine Beschichtung auf, die aus der folgenden Gruppe ausgewählt ist: Al₂O₃/SiO₂, TiO₂/Al₂O₃, TiO₂/SiO₂, Ta₂O₅ oder MgF₂. Erfindungsgemäß hat sich herausgestellt, dass durch jeden der vorstehenden Stoffe oder Stoffgemische eine AR-Beschichtung, die zudem einen Kratzschutz sowie einen Temperaturschutz für das Reflexionselement bildet, zur Verfügung gestellt werden kann. Besonders bevorzugt weist das Reflexionselement erfindungsgemäß eine Beschichtung aus Ta₂O₅ (Tantalpentoxid) auf. Denn erfindungsgemäß wurde überraschend festgestellt, dass durch eine Beschichtung des Reflexionselements mit Ta₂O₅ die Reflexion im Wellenlängenbereich von etwa 3.425 bis 3.650 nm auf unter 0,05 % reduziert werden konnte.

Zur Beschichtung des Reflexionselementes mit einer Beschichtung, insbesondere einer Beschichtung aus einem der vorstehenden Stoffe oder Stoffgemische, kann auf die aus dem Stand der Technik zum Auftrag einer Beschichtung bekannten Technologien zurückgegriffen werden, also beispielsweise chemische Gasphasenabscheidung (CVD) oder physikalische Gasphasenabscheidung (PVD).

Nach einer besonders bevorzugten Ausführungsform ist das Reflexionselement ein Retroreflektor. Bekanntermaßen handelt es sich bei einem Retroreflektor (der auch als Tripelprisma bezeichnet wird), um eine Vorrichtung, durch die einfallende elektromagnetische Wellen, also insbesondere auch Licht oder Laserstrahlen, unabhängig von der Einfallsrichtung in Bezug auf die Ausrichtung der Vorrichtung weitgehend in die Richtung reflektiert werden, aus der sie gekommen sind. Die Ausbildung des Reflexionselementes als Retroreflektor hat insbesondere auch den Vorteil, dass der durch das Reflexionselement reflektierte Laserstrahl besonders einfach und effektiv auf das Detektionselement reflektierbar ist.

Nach einer bevorzugten Ausführungsform weist das Reflexionselement eine Einfallfläche auf, über die ein durch die Strahlungsvorrichtung erzeugter Laserstrahl in das Reflexionselement einleitbar ist, wobei die Einfallfläche als ebene Fläche ausgebildet ist, die in einem Winkel ungleich 90° zur ersten optischen Achse ausgerichtet ist. Eine solche Neigung der Einfallfläche zur ersten optischen Achse hat insbesondere auch den Vorteil, dass etwaig an der Einfallfläche reflektierte Strahlungsanteile des Laserstrahls nicht in die Richtung des einfallenden Laserstrahls reflektiert werden, so dass eine Interferenz mit dem einfallenden Laserstrahl vermieden werden kann. Nach einer bevorzugten Ausführungsform ist die Normale auf die Einfallfläche in einem Winkel im Bereich von > 0 bis 5°, bevorzugter in einem Winkel im Bereich von 1 bis 5° und besonders bevorzugt in einem Winkel von 3° zur ersten optischen Achse ausgerichtet.

Bevorzugt ist die Strahlungsvorrichtung des erfindungsgemäßen Messgerätes eine Laserdiode, besonders bevorzugt eine abstimmbare Laserdiode. Nach einer bevorzugten Ausführungsform wird eine Laserdiode in Form einer Laserdiode, insbesondere in Form einer abstimmbaren Laserdiode verwendet, die aus der folgenden Gruppe ausgewählt ist: Interbandkaskadenlaser, Quantenkaskadenlaser.

Ein Interbandkaskadenlaser, der auch als ICL (Interband Cascade Laser) bezeichnet wird, ist eine Laserdiode für die Emission von Wellenlängen im Bereich von etwa 2,8 µm bis 5,8 µm.

Ein Quantenkaskadenlaser, der auch als QKL oder QCL (Quantum Cascade Laser) bezeichnet wird, ist eine Laserdiode für die Emission von Wellenlängen im Bereich von etwa 3,5 µm bis wenigstens etwa 14 µm.

Wenngleich sich Interbandkaskadenlaser und Quantenkaskadenlaser, wie vorstehend ausgeführt, gleichermaßen vorteilhaft als Laser in dem erfindungsgemäßen Messgerät eignen, wird erfindungsgemäß ein Interbandkaskadenlaser besonders bevorzugt als Laser verwendet.

Bevorzugt ist die Strahlungsvorrichtung, insbesondere die abstimmbare Laserdiode, eine über 2,0 µm bis 5,0 µm abstimmbare Laserdiode.

Erfindungsgemäß hat sich herausgestellt, dass eine über diesen Wellenlängenbereich abstimmbare Laserdiode besonders vorteilhaft mit dem Reflexionselement in Form von Spinell, Polykristallinem Aluminiumoxid oder Aluminiumoxynitrid zusammenwirkt, da diese Substanzen in diesem Wellenlängenbereich optisch für den Laserstrahl durchlässig sind und den Laserstrahl insbesondere auch in diesem Wellenlängenbereich besonders vorteilhaft reflektieren.

Das Detektionselement kann grundsätzlich in Form eines beliebigen aus dem Stand der Technik bekannten Detektionselementes zur Detektion eines Laserstrahls vorliegen. Nach einer bevorzugten Ausführungsform umfasst das wenigstens eine Detektionselement wenigstens einen Photodetektor. Bekanntermaßen wird als Photodetektor ein elektronisches Bauelement bezeichnet, das Licht unter Benutzung des photoelektrischen Effekts in ein elektrisches Signal umwandelt beziehungsweise einen von der einfallenden Strahlung abhängigen elektrischen Widerstand zeigt. Nach einer besonders bevorzugten Ausführungsform umfasst das wenigstens eine Detektionselement wenigstens einen Photodetektor in Form einer Photodiode.

Durch das Detektionselement ist der durch das Detektionselement detektierte Laserstrahl in ein elektrisches Signal umwandelbar, das anschließend gemäß den bekannten Methoden zur Gasmessung ausgewertet wird. Zur Konzentrationsmessung des zu messenden Gases kann der durch das Detektionselement detektierte Laserstrahl beispielsweise mittels des Beer-Lambert-Gesetzes zur Bestimmung der Gaskonzentration ausgewertet werden. Bevorzugt erfolgt die Auswertung mittels einer Auswertelektronik. Die Auswertelektronik kann Bestandteil des erfindungsgemäßen Messgerätes sein oder auch in Form einer separaten Auswertelektronik vorliegen. Eine solche Auswertelektronik kann gemäß den zu TDLAS bekannten Auswertelektroniken vorliegen.

Nach einer bevorzugten Ausführungsform ist ein durch die Strahlungsvorrichtung erzeugter Laserstrahl entlang eines Abschnitts der ersten optischen Achse durch ein Gasgemisch leitbar. Entlang dieses Abschnitts der ersten optischen Achse kann der Laserstrahl mit dem zu messenden Gas im Gasgemisch interagieren beziehungsweise kann die Strahlungsintensität des Laserstrahls auf Grund der Absorption mit dem Gas in diesem Abschnitt verringert werden. Nach einer Fortbildung dieses Erfindungsgedankens kann ein durch die Strahlungsvorrichtung erzeugter Laserstrahl auch entlang eines Abschnitts der zweiten optischen Achse durch das Gasgemisch leitbar sein beziehungsweise der durch das Reflexionselement reflektierte Laserstrahl entlang eines Abschnitts der zweiten optischen Achse durch das Gasgemisch leitbar sein. Auf Grund der Absorption mit dem zu bestimmenden Gas wird die Strahlungsintensität des Laserstrahls beim zweiten Durchgang durch das Gasgemisch entlang eines Abschnitts der zweiten optischen Achse weiter reduziert. Diese stärkere Reduzierung der Strahlungsintensität kann durch das wenigstens eine Detektionsgerät umso deutlicher detektiert und die Gasmessung daher umso sicherer gemessen und ausgewertet werden.

Nach einer bevorzugten Ausführungsform umfasst das erfindungsgemäße Messgerät eine Sonde, wobei der Abschnitt der ersten optischen Achse in der Sonde verläuft. Nach einer Fortbildung dieses Erfindungsgedankens verläuft auch der Abschnitt der zweiten optischen Achse in der Sonde. Die Sonde kann insbesondere derart ausgebildet sein, dass sie in ein Gasgemisch einführbar ist. Durch Einführung der Sonde in ein Gasgemisch kann ein durch die Strahlungsvorrichtung erzeugter Laserstrahl entlang eines Abschnitts der ersten optischen Achse sowie der zweiten optischen Achse durch das Gasgemisch leitbar sein. Nach einer bevorzugten Ausführungsform umfasst das erfindungsgemäße Messgerät ferner eine Einrichtung zur Abgabe eines Spülgases, durch welche das Reflexionselement beziehungsweise das Polykristalline Aluminiumoxid

mit einem Spülgas umspülbar ist. Hierdurch kann das Reflexionselement vor aggressiven Gasen des Gasgemisches geschützt werden.

Im Übrigen kann das erfindungsgemäße Messgerät beliebige weitere Komponenten umfassen, die aus dem Stand der Technik für TDLAS bekannt sind. Insbesondere kann das erfindungsgemäße Messgerät beispielsweise eine Sendeoptik, also beispielsweise eine oder mehrere Linsen und/oder Spiegel aufweisen, durch die ein durch die Strahlungsvorrichtung erzeugter Laserstrahl optisch formbar ist. Ferner kann das Messgerät eine Empfangsoptik aufweisen, also beispielsweise eine oder mehrere Linsen und/oder Spiegel, durch die ein durch das Reflexionselement reflektierter Laserstrahl - vor Auftreffen auf das wenigstens eine Detektionselement - formbar ist.

Bevorzugt werden als Sendeoptik und Empfangsoptik ein oder mehrere Spiegel und besonders bevorzugt ferner keine Linsen verwendet, und besonders bevorzugt insbesondere dann, soweit als Laser ein Interbandkaskadenlaser oder ein Quantenkaskadenlaser verwendet wird. Denn eine Linse weist stets einen gewissen Anteil an Reflexion auf, auf den ein solcher Laser sehr empfindlich reagiert. Eine solche Reflexion kann durch die Verwendung von Spiegeln als Empfangsoptik reduziert oder auch praktisch gänzlich unterdrückt werden.

Beschrieben wird auch die Verwendung eines Reflexionselementes, ausgewählt aus der folgenden Gruppe: Spinell, Polykristallines Aluminiumoxid, Aluminiumoxynitrid, durch welches ein Laserstrahl in einem Messgerät zur absorptions-spektroskopischen Gasmessung, insbesondere in einem Diodenlaser-Absorptionsspektroskop mittels durchstimmbarem Laser (TDLAS), reflektierbar ist. Besonders bevorzugt erfolgt diese Verwendung, wie oben ausgeführt, mit der Maßgabe, dass Spinell verwendet wird.

In der praktischen Anwendung kann das erfindungsgemäße Messgerät wie folgt betrieben werden.

Durch die Strahlungsvorrichtung, insbesondere eine abstimmbare Laserdiode, wird ein Laserstrahl erzeugt, insbesondere in einem Wellenlängenbereich von 2,0 µm bis 5,0 µm. Der erzeugte Laserstrahl kann, gegebenenfalls nach einer Strahlformung durch eine Sendeoptik, entlang der ersten optischen Achse zum Reflexionselement geleitet werden. Auf diesem Weg wird der Laserstrahl bevorzugt entlang eines Abschnitts der ersten optischen Achse durch ein Gasgemisch geleitet, welches ein zu bestimmendes Gas umfasst, insbesondere ein Gas umfasst, dessen Konzentration in dem Gasgemisch zu bestimmen ist. Durch das Reflexionselement wird der Laserstrahl reflektiert. Bei dem als Polykristallines Aluminiumoxid vorliegenden Reflexionselement handelt es sich bevorzugt um einen Retroreflektor, wobei das Reflexionselement ferner bevorzugt eine Antireflexionsbeschichtung aufweist und die Einfallfläche des Reflexionselementes bevorzugt in einem Winkel schräg zur ersten optischen Achse ausgerichtet ist. Der vom Reflexionselement reflektierte Laserstrahl wird entlang der zweiten optischen Achse zum wenigstens einen Detektionselement reflektiert, wobei der Laserstrahl gegebenenfalls durch eine Empfangsoptik geformt wird, und anschließend auf das wenigstens eine Detektionselement, besonders bevorzugt eine Photodiode des wenigstens einen Detektionselementes auftrifft. Entlang der zweiten optischen Achse wird der Laserstrahl entlang eines Abschnitts bevorzugt wiederum durch das Gasgemisch geleitet, wodurch der Laserstrahl erneut mit dem im Gasgemisch zu messenden Gas interagiert und hierdurch weiter an Strahlungsintensität verliert. Der auf das wenigstens eine Detektionselement, insbesondere die Photodiode, auftreffende Laserstrahl wird anschließend durch das wenigstens eine Detektionselement detektiert, insbesondere durch das wenigstens eine Detektionselement in ein elektrisches Signal umgewandelt, das anschließend bevorzugt mittels einer Auswertelektronik ausgewertet und dabei das zu messende Gas gemessen wird, insbesondere dessen Konzentration in der Gasmischung bestimmt wird. Erfindungsgemäß hat sich herausgestellt, dass das erfindungsgemäße Messgerät vorteilhaft zur Bestimmung der Gaskonzentration verwendet werden kann, insbesondere zur Bestimmung der der Gaskonzentration wenigstens eines der folgenden Gase, insbesondere in einer Gasmischung: C₂H₂, C₂H₄, C₂H₃, CH₂O, CH₃Cl, CH₄, CO, CO₂, CS, CS₂, H₂, H₂O, H₂S, HBr, HCl, HCN, HF, Hl, HOCI, N₂, N₂O, NH₃, NO, NO₂, O₃, OCS, PH₃, SO₂, SO₃. Bevorzugt wird das erfindungsgemäße Messgerät zur Bestimmung der Gaskonzentration wenigstens eines der folgenden Gase, insbesondere in einer Gasmischung, verwendet: C₂H₄, C₂H₆, CH₂O, CO, NO, NO₂, SO₂, SO₃.

Besonders bevorzugt wird das erfindungsgemäße Messgerät zur Bestimmung der Gaskonzentration von Formaldehyd (CH₂O), insbesondere in einer Gasmischung, verwendet.

Beschrieben wird ferner auch die Verwendung des erfindungsgemäßen Messgerätes zur Bestimmung der Konzentration von gasförmigem Formaldehyd in einer Gasmischung.

Gegenstand der Erfindung ist auch ein Verfahren zur absorptions-spektroskopischen Gasmessung, umfassend die folgenden Schritte:
Zur Verfügungstellung eines erfindungsgemäßen Messgerätes;
Erzeugung eines Laserstrahles durch die Strahlungsvorrichtung;
Detektion des Laserstrahles durch das Detektionselement;
Durchführung einer Gasmessung auf Basis der Detektion.

Die Erzeugung des Laserstrahls, die Detektion des Laserstrahls sowie die Durchführung der Gasmessung auf Basis der Detektion kann, wie hierin beschrieben, erfolgen.

Weitere Merkmale der Erfindung ergeben sich aus den Ansprüchen, den Figuren und der zugehörigen Figurenbeschreibung.

Ein Ausführungsbeispiel der Erfindung wird anhand der nachfolgenden Figurenbeschreibung näher erläutert.

In den Figuren zeigt
- Figur 1: eine schematische Darstellung eines Beispiels eines Messgerätes;
- Figur 2: eine perspektivische Ansicht eines Beispiels eines als Reflexionselement verwendeten Spinells; und
- Figur 3: ein weiteres Beispiel eines Messgerätes.

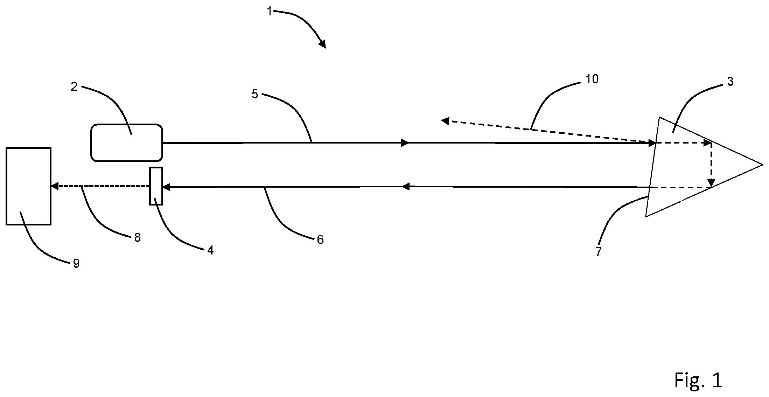

In Figur 1 ist eine Ausführungsform eines Messgerätes zur absorptions-spektroskopischen Gasmessung dargestellt. Das in seiner Gesamtheit mit dem Bezugszeichen 1 gekennzeichnete Messgerät ist zur Durchführung einer abstimmbaren Diodenlaser-Absorptionsspektroskopie (TDLAS) hergerichtet. Das Messgerät 1 umfasst eine Strahlungsvorrichtung 2 in Form einer Laserdiode, durch die ein Laserstrahl erzeugbar ist. Das Messgerät 1 umfasst ferner ein Reflexionselement 3, durch das ein durch die Strahlungsvorrichtung 2 erzeugter Laserstrahl reflektierbar ist, in Form eines Spinells. Schließlich umfasst das Messgerät 1 ein Detektionselement 4, durch das ein Laserstrahl detektierbar ist, in Form einer Photodiode. Ein durch die Strahlungsvorrichtung 2 erzeugbarer Laserstrahl ist entlang einer ersten optischen Achse 5 zum Reflexionselement 3 leitbar. Entlang einer zweiten optischen Achse 6 ist ein durch das Reflexionselement 3 reflektierter Laserstrahl zum Detektionselement 4 leitbar.

Der Spinell beziehungsweise das Reflexionselement 3 ist als Retroreflektor beziehungsweise Tripelprisma ausgebildet und weist eine mittels PVD aufgebrachte Antireflexionsbeschichtung aus Ta₂O₅ auf.

Der Spinell beziehungsweise das Reflexionselement 3 weist eine Einfallfläche 7 auf, über die ein durch die Strahlungsvorrichtung 2 erzeugter Laserstrahl in den Spinell 3 einleitbar ist, wobei die Einfallfläche 7 als ebene Fläche ausgebildet ist, deren Normale in einem Winkel von 3° zur ersten optischen Achse 5 ausgerichtet ist.

Bei der Laserdiode 2 handelt es sich um einen Interbandkaskadenlaser, der über eine Wellenlänge von 3.627 nm bis 3.633 nm (bei dem hier zum messenden Gas Formaldehyd) abstimmbar ist.

Das Detektionselement 4 besteht aus einer Photodiode, durch die ein durch das Detektionselement 4 detektierter Laserstrahl in ein elektrisches Signal umwandelbar ist. Über eine elektronische Datenleitung 8 ist das Detektionselement 4 an eine Auswertelektronik 9 gekoppelt, durch die vom Detektionselement 4 erzeugte elektrische Signale auswertbar sind. Im Ausführungsbeispiel liegt die Auswertelektronik in Form einer elektronischen Datenverarbeitungsvorrichtung vor.

Das Messgerät 1 ist zur Bestimmung der Konzentration von gasförmigem Formaldehyd (CH₂O) in einem Gasgemisch hergerichtet.

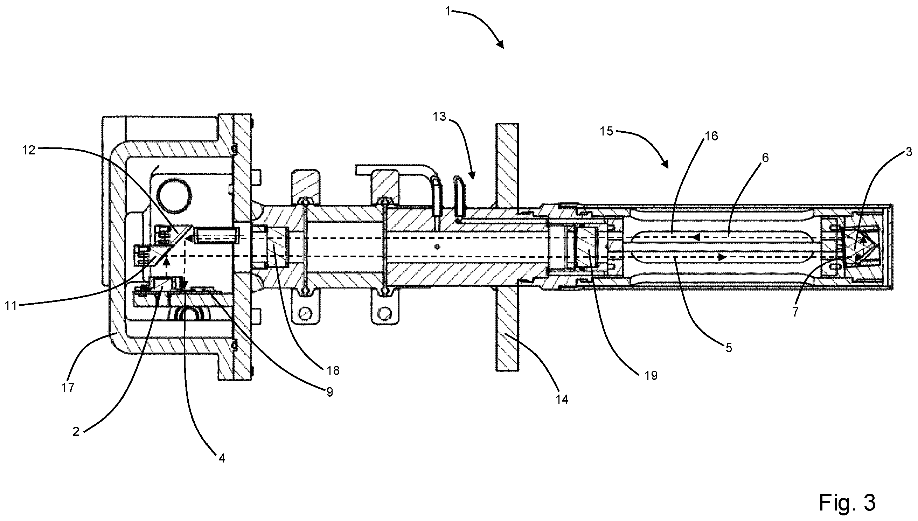

Um die Konzentration von Formaldehyd in einem Gasgemisch durch das Messgerät 1 bestimmen zu können, weist dieses zweckmäßig eine Sonde auf, die in einer praktischen Ausführungsform des Messgerätes 1, wie sie in Figur 3 gezeigt ist, verwirklicht ist. Dabei ist ein durch die Strahlungsvorrichtung 2 erzeugter Laserstrahl entlang eines Abschnitts der ersten optischen Achse 5 sowie entlang eines Abschnitts der zweiten optischen Achse 6, der jeweils in der Sonde verläuft, durch das Gasgemisch leitbar.

In der praktischen Anwendung wird das Messgerät 1 wie folgt verwendet, um die Konzentration von Formaldehyd in einem Gasgemisch zu bestimmen.

Das Messgerät 1 wird zunächst derart angeordnet, dass ein Abschnitt der ersten optischen Achse 5 und der zweiten optischen Achse 6 durch ein Gasgemisch, in welchem die Konzentration von Formaldehyd zu bestimmen ist, verlaufen. Durch die Strahlungsvorrichtung 2 wird ein Laserstrahl erzeugt, der entlang der ersten optischen Achse 5 zunächst zum Reflexionselement beziehungsweise Spinell 3 gelenkt wird, über die Einfallfläche 7 in das Reflexionselement eingeleitet wird und durch das Reflexionselement 3 reflektiert wird. Der Weg des Laserstrahls im Reflexionselement 3 ist durch gestrichelte Linien angedeutet. Der reflektierte Laserstrahl wird anschließend entlang der zweiten optischen Achse 6 zum Detektionselement 4 geleitet, dort detektiert, in ein elektrisches Signal umgewandelt und dieses elektrische Signal über die elektronische Datenleitung 8 zur Auswertelektronik 9 geleitet. Der durch die Strahlungsvorrichtung 2 erzeugte Laserstrahl wird in einem vorgegebenen Wellenlängenbereich periodisch moduliert, wobei dieser Wellenlängenbereich wenigstens eine Absorptionsbande von Formaldehyd umfasst. Hierdurch wird die Strahlungsintensität des Laserstrahls, während er das Gasgemisch durchstrahlt, verringert. Diese Verringerung der Strahlungsintensität des Laserstrahls wird durch das Detektionselement 4 detektiert und auf Basis dieser Detektion die Konzentration von Formaldehyd im Gasgemisch durch die Auswertelektronik 9 bestimmt.

Durch Verwendung eines Spinells als Reflexionselement 3 ist diese Bestimmung der Konzentration von Formaldehyd im Gasgemisch besonders zuverlässig durchführbar. Denn der Spinell bricht den Laserstrahl nicht auf und erweist sich auch gegenüber einem heißen und aggressiven Gasgemisch als beständig. Ferner erweist sich der Spinell für die benötigten Wellenlängen als durchlässig. Indem der Spinell ferner als Retroreflektor ausgebildet ist, wird der in den Spinell einfallende Laserstrahl in die Richtung beziehungsweise parallel zu der Richtung, aus der der Laserstrahl entlang der ersten optischen Achse 5 in den Spinell eingefallen ist, reflektiert.

Ferner kann durch die Neigung der Einfallfläche 7 zur ersten optischen Achse 5 eine Interferenz des in den Spinell eingeleiteten Laserstrahls mit einem an der Einfallfläche 7 reflektierten Strahlungsanteil des Laserstrahls verhindert werden. Insoweit wird ein etwaig an der Einfallfläche 7 reflektierter Strahlungsanteil des Laserstrahls nicht in Richtung des einfallenden Laserstrahls, sondern vielmehr in einem Winkel hierzu reflektiert, wie durch den Pfeil 10 angedeutet.

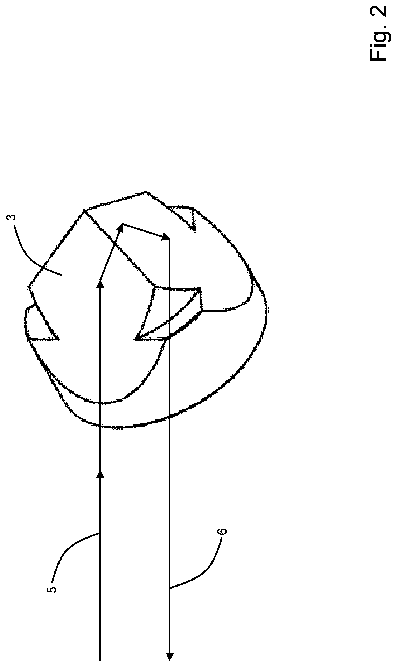

Der in Figur 1 nur schematisch dargestellte Spinell des Reflexionselementes 3 ist in Figur 2 in einer perspektivischen Ansicht genauer dargestellt. Deutlich zu erkennen ist in Figur 2, dass das Reflexionselement 3 als Retroreflektor beziehungsweise Tripelprisma ausgebildet ist. Der Strahlengang im Reflexionselement 3 ist in Figur 2 durch Pfeile angedeutet, wobei der Laserstrahl zunächst entlang der ersten optischen Achse 5 in das Reflexionselement 3 eingeleitet wird, dort dreifach reflektiert wird und das Reflexionselement 3 anschließend entlang der zweiten optischen Achse 6 verlässt.

In Figur 3 ist ein Messgerät gemäß den Figuren 1 und 2 in einem Ausführungsbeispiel einer praktischen Ausführungsform dargestellt.

Gleiche, beziehungsweise gleichwirkende Elemente sind im Ausführungsbeispiel gemäß Figur 3 dabei mit den gleichen Bezugszeichen wie in den Figuren 1 und 2 versehen.

In der Ausführungsform gemäß Figur 3 weist das Messgerät 1 ferner eine Sendeoptik 11 in Form eines Parabolspiegels auf, durch die ein durch die Strahlungsvorrichtung 2 erzeugter Laserstrahl formbar ist. Ferner weist das Messgerät 1 eine Empfangsoptik 12 in Form eines Parabolspiegels auf, durch die ein vom Reflexionselement 3 reflektierter Laserstrahl vor Eintreffen auf das Detektionselement 4 formbar ist.

Das Messgerät 1 gemäß Figur 3 weist ein Stahlgehäuse 13 auf, in dem die Strahlungsvorrichtung 2, die Sendeoptik 11, das Reflexionselement 3, die Empfangsoptik 12, das Detektionselement 4 sowie die Auswertelektronik 9 angeordnet sind. Ferner umfasst das Messgerät 1 einen Flansch 14, über den das Messgerät 1 an einer Vorrichtung (nicht dargestellt) befestigbar ist. Bei dieser Vorrichtung kann es sich insbesondere um eine Vorrichtung handeln, die ein Gasgemisch mit einem durch das Messgerät 1 zu messenden Gas umfasst.

Das Messgerät 1 gemäß Figur 3 umfasst ferner eine Sonde 15, die in das zu analysierende Gasgemisch einführbar ist. Die Sonde 15 ist zweckmäßig derart ausgebildet, dass sie in das Gasgemisch einführbar ist, wenn das Messgerät 1 über den Flansch 14 an der Vorrichtung befestigt ist. Die Sonde 15 weist längliche Öffnungen 16 in Form von Prozessfenstern auf.

Ein Abschnitt der ersten optischen Achse 5 und der zweiten optischen Achse 6 verlaufen durch die Sonde 15, wobei ein entlang dieser Abschnitte laufender Laserstrahl durch ein Gasgemisch leitbar ist, indem das Gasgemisch über die Öffnungen 16 in der Sonde 15 in diese eindringt.

Die Strahlungsvorrichtung 2, die Sendeoptik 11, die Empfangsoptik 12, das Detektionselement 4 und die Auswertelektronik 9 sind in einem besonders geschützten Gehäuse 17 des Messgerätes angeordnet. Über für den durch die Strahlungsvorrichtung 2 erzeugten Laserstrahl transparente Glasfenster 18, 19 ist das Gehäuse 17 von der Sonde 15 abgeschirmt.

Das Messgerät 1 gemäß Figur 3 weist ferner eine (nicht dargestellte) Einrichtung zur Abgabe eines Spülgases auf, durch welche das Reflexionselement 3 mit einem Spülgas umspülbar ist.

In der praktischen Anwendung wird das Messgerät 1 gemäß Figur 3 wie folgt verwendet. Ein durch die Strahlungsvorrichtung 2 erzeugter Laserstrahl wird durch die Sendeoptik 11 geformt und umgelenkt und entlang der ersten optischen Achse 5 durch die beiden Glasfenster 18, 19 zum Reflexionselement 3 gesendet. Durch das Reflexionselement 3 wird der Laserstrahl reflektiert und entlang der zweiten optischen Achse 6 durch die beiden Fenster 18, 19 zum Detektionselement 4 gesendet. Vor Eintreffen auf das Detektionselement 4 wird der Laserstrahl durch die Empfangsoptik 12 geformt und umgelenkt. Der Laserstrahl wird durch das Detektionselement 4 detektiert und ein dabei erzeugtes elektrisches Signal an die Auswertelektronik 9 geleitet. Durch die Auswertelektronik wird eine Gasmessung auf Basis der Detektion des Detektionselementes 4 durchgeführt.

Auf dem Abschnitt der ersten optischen Achse 5 und der zweiten optischen Achse 6, die durch die Sonde 15 führt, wird der Laserstrahl durch das zu analysierende Gasgemisch geleitet, wobei die Signalstärke des Laserstrahls, wie oben ausgeführt, auf Grund der Interaktion mit Formaldehyd abnimmt. Auf Basis dieser Abnahme der Signalstärke des Laserstrahls wird, wie oben ausgeführt, die Konzentration des Formaldehyds im Gasgemisch bestimmt.

## Patentansprüche

1. Messgerät (1) zur absorptions-spektroskopischen Gasmessung, umfassend:
1.1 eine Strahlungsvorrichtung (2), durch die ein Laserstrahl erzeugbar ist;
1.2 ein Reflexionselement (3), durch das ein Laserstrahl reflektierbar ist;
1.3 wenigstens ein Detektionselement (4), durch das ein Laserstrahl detektierbar ist;
1.4 eine erste optische Achse (5), entlang derer ein durch die Strahlungsvorrichtung (2) erzeugter Laserstrahl zum Reflexionselement (3) leitbar ist; und
1.5 eine zweite optische Achse (6), entlang derer ein durch das Reflexionselement (3) reflektierter Laserstrahl zum Detektionselement (4) leitbar ist; wobei
1.6 das Reflexionselement (3) als polykristallines Aluminiumoxid vorliegt; und
wobei
1.7 das Reflexionselement (3) eine Beschichtung aufweist, die aus der folgenden Gruppe ausgewählt ist: Al₂O₃/SiO₂, TiO₂/Al₂O₃, TiO₂/SiO₂, Ta₂O₅ oder MgF₂.

2. Messgerät (1) nach Anspruch 1, wobei das Reflexionselement (3) ein Retroreflektor ist.

3. Messgerät (1) nach wenigstens einem der vorhergehenden Ansprüche, wobei das Reflexionselement (3) eine Beschichtung aus Ta₂O₅ aufweist.

4. Messgerät (1) nach wenigstens einem der vorhergehenden Ansprüche, wobei das Reflexionselement (3) eine Einfallfläche (7) aufweist, über die ein durch die Strahlungsvorrichtung (2) erzeugter Laserstrahl in das Reflexionselement (3) einleitbar ist, wobei die Einfallfläche (7) als ebene Fläche ausgebildet ist, die in einem Winkel ungleich 90° zur ersten optischen Achse (5) ausgerichtet ist.

5. Messgerät (1) nach wenigstens einem der vorhergehenden Ansprüche, wobei die Strahlungsvorrichtung (2) eine Laserdiode ist.

6. Messgerät (1) nach wenigstens einem der vorhergehenden Ansprüche, wobei die Strahlungsvorrichtung (2) eine abstimmbare Laserdiode ist.

7. Messgerät (1) nach wenigstens einem der vorhergehenden Ansprüche, wobei die Strahlungsvorrichtung (2) eine über 2,0 µm bis 5,0 µm abstimmbare Laserdiode ist.

8. Messgerät (1) nach wenigstens einem der vorhergehenden Ansprüche, wobei das wenigstens eine Detektionselement (4) wenigstens einen Photodetektor umfasst.

9. Messgerät (1) nach wenigstens einem der vorhergehenden Ansprüche, wobei ein durch die Strahlungsvorrichtung (2) erzeugter Laserstrahl entlang eines Abschnitts der ersten optischen Achse (5) durch ein Gasgemisch leitbar ist.

10. Messgerät (1) nach Anspruch 9, wobei ein durch die Strahlungsvorrichtung (2) erzeugter Laserstrahl auch entlang eines Abschnitts der zweiten optischen Achse (6) durch das Gasgemisch leitbar ist.

11. Messgerät (1) nach Anspruch 9, ferner umfassend eine Sonde (15), wobei der Abschnitt der ersten optischen Achse (5) in der Sonde (15) verläuft.

12. Messgerät (1) nach Anspruch 11, wobei auch der Abschnitt der zweiten optischen Achse (6) in der Sonde (15) verläuft.

13. Messgerät (1) nach wenigstens einem der vorhergehenden Ansprüche, ferner umfassend eine Einrichtung zur Abgabe eines Spülgases, durch welche das Reflexionselement (3) mit einem Spülgas umspülbar ist.

14. Verfahren zur absorptions-spektroskopischen Gasmessung, umfassend die folgenden Schritte:
A. zur Verfügungstellung eines Messgerätes (1) nach wenigstens einem der Ansprüche 1 bis 13;
B. Erzeugung eines Laserstrahles durch die Strahlungsvorrichtung (2);
C. Detektion des Laserstrahles durch das Detektionselement (4);
D. Durchführung einer Gasmessung auf Basis der Detektion.

## Claims

1. Measuring device (1) for absorption-spectroscopic gas measurement, comprising:
1.1 a radiation device (2) capable of generating a laser beam;
1.2 a reflection element (3) capable of reflecting a laser beam;
1.3 at least one detection element (4) capable of detecting a laser beam;
1.4 a first optical axis (5) along which a laser beam generated by the radiation device (2) can be guided to the reflection element (3); and
1.5 a second optical axis (6) along which a laser beam reflected by the reflection element (3) can be guided to the detection element (4); wherein
1.6 the reflection element (3) takes the form of polycrystalline aluminium oxide; and wherein
1.7 the reflection element (3) has a coating selected from the following group: Al₂O₃/SiO₂, TiO₂/Al₂O₃, TiO₂/SiO₂, Ta₂O₅ or MgF₂.

2. A measuring device (1) according to claim 1, wherein the reflection element (3) is a retroreflector.

3. A measuring device (1) according to at least one of the preceding claims, wherein the reflection element (3) has a coating of Ta₂O₅.

4. A measuring device (1) according to at least one of the preceding claims, wherein the reflection element (3) has an incident surface (7) via which a laser beam generated by the radiation device (2) can be guided into the reflection element (3), wherein the incident surface (7) is configured as a flat surface that is oriented at an angle in relation to the first optical axis (5) that is not equal to 90°.

5. A measuring device (1) according to at least one of the preceding claims, wherein the radiation device (2) is a laser diode.

6. A measuring device (1) according to at least one of the preceding claims, wherein the radiation device (2) is a tunable laser diode.

7. A measuring device (1) according to at least one of the preceding claims, wherein the radiation device (2) is a laser diode that is tunable over a range from 2.0 µm to 5.0 µm.

8. A measuring device (1) according to at least one of the preceding claims, wherein the at least one detection element (4) includes at least one photodetector.

9. A measuring device (1) according to at least one of the preceding claims, wherein a laser beam generated by the radiation device (2) can be guided along a section of the first optical axis (5) through a gas mixture.

10. A measuring device (1) according to claim 9, wherein a laser beam generated by the radiation device (2) can also be guided along a section of the second optical axis (6) through the gas mixture.

11. A measuring device (1) according to claim 9, further including a probe (15), wherein the section of the first optical axis (5) extends in the probe (15).

12. A measuring device (1) according to claim 11, wherein the section of the second optical axis (6) also extends in the probe (15).

13. A measuring device (1) according to at least one of the preceding claims, further including a device for discharging a flushing gas by means of which the reflection element (3) can be flushed with a flushing gas.

14. A method for absorption-spectroscopic gas measurement, comprising the following steps:
A. providing a measuring device (1) according to at least one of claims 1 to 13;
B. generating a laser beam by means of the radiation device (2);
C. detection of the laser beam by the detection element (4);
D. carrying out a gas measurement based on the detection.

## Revendications

1. Dispositif de mesure (1) destiné à la mesure de gaz par spectroscopie d'absorption, comprenant :
1.1 Un dispositif de rayonnement (2), par lequel un rayon laser peut être produit,
1.2 un élément réfléchissant (3), par lequel un rayon laser peut être réfléchi,
1.3 au moins un élément de détection (4) par lequel un rayon laser peut être détecté,
1.4 un premier axe optique (5) le long duquel un rayon laser produit par le dispositif de rayonnement (2) peut être dirigé vers l'élément réfléchissant (3), et
1.5 un deuxième axe optique (6) le long duquel un rayon laser réfléchi par l'élément réfléchissant (3) peut être dirigé vers l'élément de détection (4), sachant que
1.6 l'élément réfléchissant (3) est présent sous la forme d'oxyde d'aluminium polycristallin, et sachant que
1.7 l'élément réfléchissant (3) comporte un revêtement, qui est choisi à partir du groupe suivant : Al₂O₃/SiO₂, TiO₂AlO₃, TiO₂/SiO₂, Ta₂O₅ ou MgF₂.

2. Dispositif de mesure (1) selon la revendication 1, sachant que l'élément réfléchissant (3) est un rétroréflecteur.

3. Dispositif de mesure (1) selon au moins l'une quelconque des revendications précédentes, sachant que l'élément réfléchissant (3) comporte un revêtement en Ta₂O₅.

4. Dispositif de mesure (1) selon au moins l'une quelconque des revendications précédentes, sachant que l'élément réfléchissant (3) comporte une surface d'incidence (7) sur laquelle peut être dirigé un rayon laser produit par le dispositif de rayonnement (2) dans l'élément réfléchissant (3), sachant que la surface d'incidence (7) est constituée sous la forme d'une surface plane, qui est orientée dans un angle différent de 90° par rapport au premier axe optique (5).

5. Dispositif de mesure (1) selon au moins l'une quelconque des revendications précédentes, sachant que le dispositif de rayonnement (2) est une diode laser.

6. Dispositif de mesure (1) selon au moins l'une quelconque des revendications précédentes, sachant que le dispositif de rayonnement (2) est une diode laser accordable.

7. Dispositif de mesure (1) selon au moins l'une quelconque des revendications précédentes, sachant que le dispositif de rayonnement (2) est une diode laser accordable sur 2,0 µm à 5,0 µm.

8. Dispositif de mesure (1) selon au moins l'une quelconque des revendications précédentes, sachant qu'au moins un élément de détection (4) comprend au moins un photodétecteur.

9. Dispositif de mesure (1) selon au moins l'une quelconque des revendications précédentes, sachant que le rayon laser produit par le dispositif de rayonnement (2) peut être dirigé le long d'une section du premier axe optique (5) par un mélange gazeux.

10. Dispositif de mesure (1) selon la revendication 9, sachant qu'un rayon laser produit par le dispositif de rayonnement (2) peut être dirigé également le long d'une section du deuxième axe optique (6) par le mélange gazeux.

11. Dispositif de mesure (1) selon la revendication 9, comprenant en plus une sonde (15), sachant que la section du premier axe optique (5) passe dans la sonde (15).

12. Dispositif de mesure (1) selon la revendication 11, sachant que la section du deuxième axe optique (6) passe également dans la sonde (15).

13. Dispositif de mesure (1) selon au moins l'une quelconque des revendications précédentes, comprenant en plus un système de distribution d'un gaz de rinçage par lequel l'élément réfléchissant (3) peut être intégralement balayé avec un gaz de rinçage.

14. Procédé de mesure de gaz par spectroscopie d'absorption, comprenant les étapes suivantes :
A. mise à disposition d'un dispositif de mesure (1) selon au moins l'une quelconque des revendications 1 à 13,
B. production d'un rayon laser par le dispositif de rayonnement (2),
C. détection du rayon laser par l'élément de détection (4),
D. exécution d'une mesure de gaz sur la base de la détection.
